(19) Europäisches Patentamt
European Patent Office
Office européen des brevets

(11) Veröffentlichungsnummer: **0 449 109 B1**

(12) # EUROPÄISCHE PATENTSCHRIFT

(45) Veröffentlichungstag der Patentschrift: **12.07.95**

(51) Int. Cl.$^{6}$: **C09B 53/00**, B41M 5/38, C09B 23/04, C09B 23/02

(21) Anmeldenummer: **91104408.9**

(22) Anmeldetag: **21.03.91**

(54) **Indonaphtholfarbstoffe und ein Verfahren zu ihrer thermischen Übertragung.**

(30) Priorität: **30.03.90 DE 4010269**

(43) Veröffentlichungstag der Anmeldung:
**02.10.91 Patentblatt 91/40**

(45) Bekanntmachung des Hinweises auf die Patenterteilung:
**12.07.95 Patentblatt 95/28**

(84) Benannte Vertragsstaaten:
**CH DE FR GB IT LI**

(56) Entgegenhaltungen:
**EP-A- 0 307 713**
**US-A- 4 923 638**
**US-A- 4 975 409**

**JAPANESE PATENTS GAZETTE Section CH, week 8835, 12-10-1988 Derwent Publications Ltd., London GB**

(73) Patentinhaber: **BASF Aktiengesellschaft**
**Carl-Bosch-Strasse 38**
**D-67063 Ludwigshafen (DE)**

(72) Erfinder: **Bach, Volker, Dr.**
**Robert-Schuman-Strasse 8**
**W-6730 Neustadt (DE)**
Erfinder: **Etzbach, Karl-Heinz, Dr.**
**Carl-Bosch-Ring 55**
**W-6710 Frankenthal (DE)**
Erfinder: **Sens, Ruediger, Dr.**
**Medicusstrasse 12**
**W-6800 Mannheim 1 (DE)**

**EP 0 449 109 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Indonaphtholfarbstoffe der Formel I

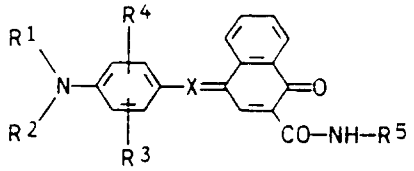

(I),

in der

X Stickstoff

$R^1$ und $R^2$ unabhängig voneinander jeweils $C_1$-$C_6$-Alkyl, das gegebenenfalls substituiert und/oder durch 1 oder 2 Sauerstoffatome in Etherfunktion unterbrochen ist, oder Allyl,

$R^3$ und $R^4$ unabhängig voneinander jeweils Wasserstoff, $C_1$-$C_4$-Alkyl, $C_1$-$C_4$-Alkoxy oder $C_1$-$C_4$-Alkanoylamino und

$R^5$ einen fünfgliedrigen aromatischen heterocyclischen Rest, der nicht benzoanelliert ist und der zwei oder mehrere Heteroatome, ausgewählt aus der Gruppe, bestehend aus Stickstoff, Sauerstoff und Schwefel, aufweist, bedeuten,

mit der Maßgabe, daß $R^1$ und $R^2$ nicht gleichzeitig für unsubstituiertes $C_1$-$C_6$-Alkyl stehen, sowie ein Verfahren zur thermischen übertragung der Farbstoffe.

Aus der US-A-4 769 360 sind Indonaphtholfarbstoffe bekannt, bei denen ein Benzoxazol-2-ylrest über ein Schwefelatom an den Naphthalinring gebunden ist.

Weiterhin beschreibt die JP-A-179 793/1988 einen Indonaphtholfarbstoff, der u.a. über eine N-Ethyl-N-(2-methylsulfonylethyl)aminogruppe verfügt und als heterocyclischen Rest den 4-Nitrothien-2-ylrest aufweist.

Aufgabe der vorliegenden Erfindung war es, neue Indonaphtholfarbstoffe bereitzustellen, die über vorteilhafte anwendungstechnische Eigenschaften verfügen.

Demgemäß wurden die eingangs näher bezeichneten Indonaphtholfarbstoffe der Formel I gefunden.

Alle in der obengenannten Formel I auftretenden Alkylgruppen können sowohl geradkettig als auch verzweigt sein.

Wenn in der obengenannten Formel I substituierte Alkylgruppen auftreten, so können als Substituenten z.B. Phenyl, Cyano, $C_1$-$C_6$-Alkanoyloxy, $C_1$-$C_4$-Alkoxycarbonyl oder $C_1$-$C_4$-Alkoxycarbonyloxy, wobei im letzten Fall die Alkoxygruppe durch Phenyl oder $C_1$-$C_4$-Alkoxy substituiert sein kann, in Betracht kommen.

Geeignete Reste $R^1$ und $R^2$ sind z.B. Methyl, Ethyl, Propyl, Isopropyl, Butyl, Isobutyl, sec-Butyl, Pentyl, Isopentyl, Neopentyl, tert-Pentyl, Hexyl, 2-Methylpentyl, Benzyl, 1- oder 2-Phenylethyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl, 2- oder 3-(2-Ethoxyethoxycarbonyloxy)-propyl, 2-Methoxyethyl, 2- oder 3-Methoxypropyl, 2-Ethoxyethyl, 2- oder 3-Ethoxypropyl, 2-Propoxyethyl, 2- oder 3-Propoxypropyl, 2-Isopropoxyethyl, 2- oder 3-Isopropoxypropyl, 2-Butoxyethyl, 2- oder 3-Butoxypropyl, 3,6-Dioxaheptyl oder 3,6-Dioxaoctyl.

Reste $R^5$ leiten sich von einem fünfgliedrigen aromatischen heterocyclischen Rest ab, der nicht benzoanelliert ist und der zwei oder mehrere Heteroatome, ausgewählt aus der Gruppe, bestehend aus Stickstoff, Sauerstoff und Schwefel, aufweist.

Geeignete heterocyclische Grundkörper, die Substituenten tragen können, von denen sich die Reste $R^5$ ableiten, sind z.B. Pyrazol, Imidazol, Oxazol, Isoxazol, Thiazol, Isothiazol, 1,2,4-Triazol, 1,2,4-Oxdiazol, 1,3,4-Oxdiazol, 1,2,4-Thiadiazol oder 1,3,4-Thiadiazol.

Hervorzuheben sind dabei Heterocyclen aus der Pyrazol-, Thiazol-, Isothiazol-, 1,2,4-Oxdiazol-, 1,3,4-Oxdiazol-, 1,2,4-Thiadiazol- oder 1,3,4-Thiadiazolreihe.

Von besonderer Bedeutung sind dabei die Reste

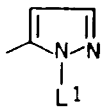 ,

(IIa)

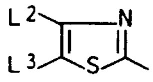 ,

(IIb)

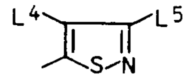 ,

(IIc)

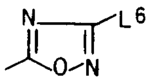 ,

(IId)

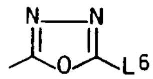 ,

(IIe)

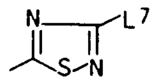 oder

(IIf)

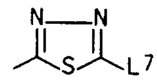 ,

(IIg)

wobei

$L^1$ $C_1$-$C_8$-Alkyl oder Cyclohexyl,

$L^2$ Wasserstoff, Chlor, $C_1$-$C_8$-Alkyl, das gegebenenfalls durch 1 Sauerstoffatom in Etherfunktion unterbrochen ist, $C_1$-$C_8$-Alkoxy oder $C_1$-$C_8$-Alkoxycarbonyl, wobei die Alkylgruppe durch 1 oder 2 Sauerstoffatome in Etherfunktion unterbrochen sein kann,

$L^3$ Wasserstoff, $C_1$-$C_8$-Alkyl, Cyano, Nitro oder $C_1$-$C_8$-Alkoxycarbonyl, wobei die Alkylgruppe durch 1 oder 2 Sauerstoffatome in Etherfunktion unterbrochen sein kann,

$L^4$ Wasserstoff, Chlor, Cyano, Nitro oder $C_1$-$C_8$-Alkoxycarbonyl, wobei die Alkylgruppe durch 1 oder 2 Sauerstoffatome in Etherfunktion unterbrochen sein kann,

$L^5$ Chlor, $C_1$-$C_8$-Alkyl, das gegebenenfalls durch 1 Sauerstoffatom in Etherfunktion unterbrochen ist, $C_1$-$C_8$-Alkoxy oder $C_1$-$C_8$-Alkylthio,

$L^6$ $C_1$-$C_8$-Alkyl und

$L^7$ Wasserstoff, Chlor, Cyano, Thiocyanato, $C_1$-$C_8$-Alkyl, das gegebenenfalls durch 1 Sauerstoffatom in Etherfunktion unterbrochen ist, $C_1$-$C_8$-Alkoxy, $C_1$-$C_8$-Alkylthio, 2-($C_1$-$C_2$-Alkoxycarbonyl)ethylthio oder $C_1$-$C_8$-Alkoxycarbonyl, wobei die Alkylgruppe durch 1 oder 2 Sauerstoffatome in Etherfunktion unterbrochen sein kann, bedeuten.

Reste $L^1$, $L^2$, $L^3$, $L^4$, $L^5$, $L^6$ und $L^7$ sind z.B. Methyl, Ethyl, Propyl, Isopropyl, Butyl, Isobutyl, sec-Butyl, Pentyl, Isopentyl, Neopentyl, tert-Pentyl, Hexyl, 2-Methylpentyl, Heptyl, Octyl oder 2-Ethylhexyl.

Reste $L^2$, $L^4$ und $L^7$ sind weiterhin z.B. 2-Methoxyethyl, 2- oder 3-Methoxypropyl, 2-Ethoxyethyl, 2- oder 3-Ethoxypropyl, Methoxy, Ethoxy, Propoxy, Isopropoxy, Butoxy, Isobutoxy, sec-Butoxy, Pentyloxy, Isopentyloxy, Neopentyloxy, Hexyloxy, Heptyloxy, Octyloxy oder 2-Ethylhexyloxy.

Reste $L^4$ und $L^7$ sind weiterhin z.B. Methylthio, Ethylthio, Propylthio, Isopropylthio, Butylthio, Isobutylthio, Pentylthio, Hexylthio, Heptylthio, Octylthio oder 2-Ethylhexylthio.

Reste $L^2$, $L^3$, $L^5$ und $L^7$ sind weiterhin z.B. Methoxycarbonyl, Ethoxycarbonyl, Propoxycarbonyl, Isopropoxycarbonyl, Butoxycarbonyl, 2-Methoxyethoxycarbonyl, 2-Ethoxyethoxycarbonyl, 3,6-Dioxaheptyloxycarbonyl oder 3, 6-Dioxaoctyloxycarbonyl.

Reste $L^7$ sind weiterhin z.B. 2-Methoxycarbonylethylthio oder 2-Ethoxycarbonylethylthio.

Bevorzugt sind Indonaphtholfarbstoffe der Formel I, in der $R^1$ und $R^2$ unabhängig voneinander jeweils $C_1$-$C_4$-Alkyl, das gegebenenfalls durch Cyano, $C_2$-$C_5$-Alkanoyloxy oder $C_1$-$C_2$-Alkoxycarbonyloxy substituiert und/oder durch 1 Sauerstoffatom in Etherfunktion unterbrochen ist.

Weiterhin bevorzugt sind Indonaphtholfarbstoffe der Formel I, in der $R^3$ und $R^4$ jeweils Wasserstoff bedeuten.

Besonders bevorzugt sind Indonaphtholfarbstoffe der Formel I, in der $R^5$ einen Rest der Formel IIa, IIb oder IIg bedeutet, wobei insbesondere solche Reste hervorzuheben sind, in denen $L^1$ $C_1$-$C_4$-Alkyl oder Cyclohexyl, $L^2$ Wasserstoff oder $C_1$-$C_4$-Alkyl, $L^3$ Wasserstoff und $L^7$ $C_1$-$C_4$-Alkyl bedeuten.

Die erfindungsgemäßen Indonaphtholfarbstoffe der Formel I können nach an sich bekannten Methoden hergestellt werden.

Beispielsweise kann man eine Nitrosoverbindung der Formel III

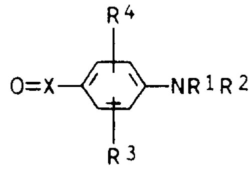

(III)

wobei X, $R^1$, $R^2$, $R^3$ und $R^4$ jeweils die obengenannte Bedeutung besitzen, mit einer Naphtholverbindung der Formel IV

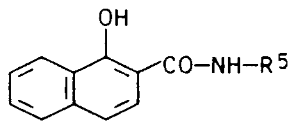

(IV),

worin $R^5$ die obengenannte Bedeutung besitzt, kondensieren (siehe z.B. DE-A-3 716 656).

Es ist auch möglich, p-Phenylendiamine der Formel V

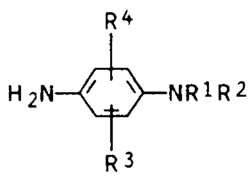

(V),

worin $R^1$, $R^2$, $R^3$ und $R^4$ jeweils die obengenannte Bedeutung besitzen, mit den Naphtholverbindungen der Formel IV oxidativ zu kuppeln (siehe z.B. US-A-4 695 287).

Eine weitere Aufgabe der vorliegenden Erfindung war es, ein neues Verfahren für den thermischen Transfer von Farbstoffen bereitzustellen.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt.

Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für subtraktive Farbmischung die geeigneten Farbtöne aufweisen,
- einen hohen molaren Absorptionskoeffizienten aufweisen sowie
- bei Lagerung des Transferblattes nicht auskristallisieren.

Diese Forderungen sind erfahrungsgemäß gleichzeitig sehr schwierig zu erfüllen.

Daher entsprechen die meisten der bekannten, für den thermischen Transferdruck verwendeten Farbstoffe nicht dem geforderten Anforderungsprofil.

Es wurde nun gefunden, daß die Übertragung von Indonaphtholfarbstoffen von einem Träger auf ein mit Kunststoff beschichtetes Papier mit Hilfe einer Energiequelle vorteilhaft gelingt, wenn man einen Träger

verwendet, auf dem sich ein oder mehrere Indonaphtholfarbstoffe der Formel I

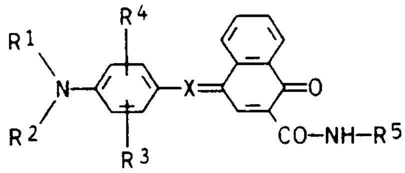

(I),

befinden, in der

| | |
|---|---|
| X | Stickstoff , |
| $R^1$ und $R^2$ | unabhängig voneinander jeweils $C_1$-$C_6$-Alkyl, das gegebenenfalls substituiert und/oder durch 1 oder 2 Sauerstoffatome in Etherfunktion unterbrochen ist, oder Allyl, |
| $R^3$ und $R^4$ | unabhängig voneinander jeweils Wasserstoff, $C_1$-$C_4$-Alkyl, $C_1$-$C_4$-Alkoxy oder $C_1$-$C_4$-Alkanoylamino und |
| $R^5$ | einen fünfgliedrigen aromatischen heterocyclischen Rest, der nicht benzoanelliert ist und der zwei oder mehrere Heteroatome, ausgewählt aus der Gruppe, bestehend aus Stickstoff, Sauerstoff und Schwefel, aufweist, bedeuten, |

mit der Maßgabe, daß $R^1$ und $R^2$ nicht gleichzeitig für unsubstituiertes $C_1$-$C_6$-Alkyl stehen.

Im Vergleich zu den bei den bekannten Verfahren verwendeten Farbstoffen zeichnen sich die beim erfindungsgemäßen Verfahren übertragenen Farbstoffe im allgemeinen durch gute Migrationsstabilität im Druckbild und gute Lichtechtheit aus.

Aufgrund ihrer hohen molaren Extinktionskoeffizienten und ihrer hohen Brillanz sind die im neuen Verfahren angewandten Farbstoffe der Formel I für die Herstellung eines für die subtraktive Farbmischung erforderlichen Trichromiesystems vorteilhaft geeignet.

Bei Abmischung mit Triazolopyridinfarbstoffen, wie sie in der älteren europäischen Patentanmeldung Nr. 90116436.8 beschrieben sind, wird eine hohe Farbtonreinheit und in entsprechenden Trichromiesystemen eine Verbesserung der Schwarz-Drucke erzielt.

Zur Herstellung der für das erfindungsgemäße Verfahren benötigten Farbstoffträger werden die Farbstoffe in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält den Farbstoff vorzugsweise in molekulardispers gelöster Form. Die Druckfarbe kann mittels einer Rakel auf den inerten Träger aufgetragen und die Färbung an der Luft getrocknet werden.

Geeignete organische Lösungsmittel für die Farbstoffe I sind z.B. solche, in denen die Löslichkeit der Farbstoffe I bei einer Temperatur von 20 °C größer als 1 Gew.%, vorzugsweise größer als 5 Gew.% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und den Farbstoff an den inerten Träger abriebfest zu binden vermögen. Dabei werden solche Bindemittel bevorzugt, die den Farbstoff nach Trocknung der Druckfarbe an der Luft in Form eines klaren, transparenten Films aufnehmen, ohne daß dabei eine sichtbare Auskristallisation des Farbstoffes auftritt.

Beispiele für solche Bindemittel sind Cellulosederivate, z.B. Methylcellulose, Ethylcellulose, Ethylhydroxyethylcellulose, Hydroxypropylcellulose, Celluloseacetat oder Celluloseacetobutyrat, Stärke, Alginate, Alkydresins, Vinylresins, Polyvinylalkohol, Polyvinylacetat, Polyvinylbutyrat oder Polyvinylpyrrolidon. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind z.B. in der DE-A-3 524 519 beschrieben.

Bevorzugte Bindemittel sind Ethylcellulose, Ethylhydroxyethylcellulose, Polyvinylbutyrat oder Polyvinylacetat.

Das Gewichtsverhältnis Bindemittel:Farbstoff beträgt im allgemeinen 1:1 bis 10:1.

Als Hilfsmittel kommen z.B. Trennmittel in Betracht, wie sie in der EP-A-227 092, EP-A-192 435 oder den dort zitierten Patentanmeldungen genannt sind. Darüber hinaus sind besonders organische Additive zu nennen, die das Auskristallisieren der Transferfarbstoffe bei Lagerung und beim Erhitzen des Farbbandes verhindern, z.B. Cholesterin oder Vanillin.

Inerte Träger sind z.B. Seiden-, Lösch- oder Pergaminpapier oder Kunststoffolien mit guter Wärmebeständigkeit, z.B. gegebenenfalls metallbeschichteter Polyester, Polyamid oder Polyimid. Der inerte Träger wird auf der der Energiequelle zugewandten Seite gegebenenfalls zusätzlich mit einer Gleitmittelschicht (Slipping layer) beschichtet, um möglicherweise ein Verkleben der Energiequelle mit dem Trägermaterial zu verhindern. Geeignete Gleitmittel werden z.B. in der EP-A-216 483 oder EP-A-227 095 beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Geeignete Rezepturen für die Nehmerschichtzusammensetzung werden z.B. in der EP-A-227 094, EP-A-133 012, EP-A-133 011, EP-A-111 004, JP-A-199 997/1986, JP-A-283 595/1986, JP-A-237 694/1986 oder JP-A-127 392/1986 ausführlich beschrieben.

Die Übertragung erfolgt mittels einer Energiequelle, z.B. mittels eines Lasers oder eines Thermokopfes, der auf eine Temperatur von ≧ 300 °C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffe eignen sich weiterhin vorteilhaft zum Färben von synthetischen Materialien, z.B. von Polyestern, Polyamiden oder Polycarbonaten.

Die folgenden Beispiele sollen die Erfindung näher erläutern. Angaben über Prozente beziehen sich, sofern nicht anders vermerkt, auf das Gewicht.

Herstellung der Farbstoffe

Beispiel 1

a)

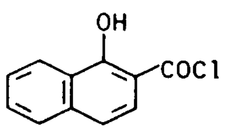

24,1 g 1-Hydroxynaphthalin-2-carbonsäure wurden in 67 ml Thionylchlorid suspendiert. Die Mischung wurde auf Rückflußtemperatur erwärmt, 5 Stunden bei dieser Temperatur gehalten und nach Abkühlen auf Raumtemperatur in 0,5 l Petrolether eingerührt. Das sich abscheidende 1-Hydroxynaphthalin-2-carbonsäurechlorid wurde abgesaugt und mit Petrolether gewaschen und getrocknet.

b)

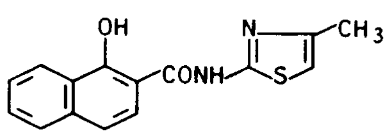

26,4 g dieses Säurechlorids wurden in 100 ml Methylenchlorid gelöst und zu einer Lösung von 14,6 g 2-Amino-4-methylthiazol, 22 ml Triethylamin und katalytischen Mengen an Dimethylaminopyridin in 100 ml Methylenchlorid bei 0 bis 5 °C getropft. Danach wurde bei Raumtemperatur bis zur vollständigen Umsetzung weiter gerührt (DC-Kontrolle), in 1 l Aceton eingerührt und abgesaugt. Der Rückstand wurde mit Wasser aufgerührt, mit Salzsäure auf einen pH-Wert von 6 bis 7 eingestellt, abgesaugt und mit Wasser gewaschen. $R_f$-Wert (gemessen in Toluol/Essigester = 5:1 v/v):0,24.

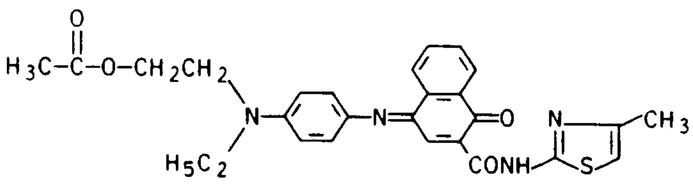

c) 5,6 g N-(2-Acetoxyethyl)-N-ethylanilin wurde auf übliche Weise mit Natriumnitrit in salzsaurer Lösung nitrosiert. Die entstehende Nitrosoverbindung wurde in Methylenchlorid aufgenommen, zu einer Lösung von 5,7 g des Naphtholamids (b) in 50 ml Methylenchlorid und 50 ml Acetanhydrid gegeben und bei Raumtemperatur bis zur vollständigen Umsetzung weitergerührt (DC-Kontrolle). Anschließend wurden 100 ml Wasser zugesetzt und 1 Stunde auf 40 °C erwärmt. Nach Abkühlen auf Raumtemperatur wurde die organische Phase abgetrennt, mit Wasser gewaschen und das Lösungsmittel unter vermindertem Druck entfernt. Der Farbstoff wurde in N,N-Dimethylformamid gelöst, durch Zugabe von Wasser gefällt, abgesaugt, unter vermindertem Druck bei 50 °C getrocknet und an Kieselgel (mit Toluol/Essigester = 5:1 v/v) chromatographiert. $R_f$-Wert (gemessen in Toluol/Essigester = 5:1 v/v) 0,37; $\lambda_{max}$ (gemessen in Methylenchlorid): 683 nm.

In analoger Weise wurden die in der folgenden Tabelle 1 aufgeführten Farbstoffe der Formel

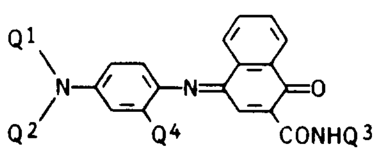

(Bsp. 1-31: $Q^4$ = H
Bsp. 32-34: $Q^4$ = $CH_3$)

erhalten. In der Tabelle gelten dabei folgende Abkürzungen:

a) Laufmittel: Toluol/Essigsäureethylester 5:1 v/v
b) Laufmittel: Essigsäureethylester
c) Laufmittel: Toluol/Essigsäureethylester 3:2 v/v
d) Laufmittel: Toluol/Essigsäureethylester 1:1 v/v
e) Laufmittel: Toluol/Essigsäureethylester 10:1 v/v
f) gemessen in Methylenchlorid

g) gemessen in Aceton

Tabelle 1

| Beispiel Nr. | $Q^1$ | $Q^2$ | $Q^3$ | $R_f$-Wert | $\lambda_{max}$ [nm] |
|---|---|---|---|---|---|
| 2 | $CH_3-\overset{O}{\overset{\|}{C}}-O-C_2H_4$ | $C_2H_5$ | 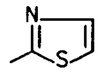 | 0,21a) | 684f) |
| 3 | $CH_3-\overset{O}{\overset{\|}{C}}-O-C_2H_4$ | $C_2H_5$ | 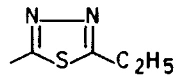 | 0,73b) | 689f) |
| 4 | $CH_3-\overset{O}{\overset{\|}{C}}-O-C_2H_4$ | $C_2H_5$ | 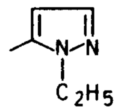 | 0,65b) | 675f) |
| 5 | $NC-C_2H_4$ | $(CH_3)_2CH-\overset{O}{\overset{\|}{C}}-O-C_2H_4$ | 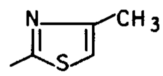 | 0,58b) | 666g) |
| 6 | $NC-C_2H_4$ | $NC-C_2H_4$ | 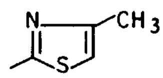 | 0,61b) | 637g) |
| 7 | $H_9C_4-O-C_2H_4$ | $C_4H_9$ | 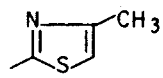 | 0,84b) | 699g) |
| 8 | $H_3C-O-\overset{O}{\overset{\|}{C}}-O-C_2H_4$ | $C_2H_5$ | 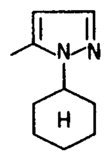 | 0,77b) | 672g) |
| 9 | $H_3C-O-\overset{O}{\overset{\|}{C}}-O-C_2H_4$ | $C_2H_5$ | 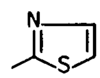 | 0,83b) | 683g) |
| 10 | $C_2H_5-O-C_2H_4-O-\overset{O}{\overset{\|}{C}}-C_2H_4$ | $C_6H_5CH_2$ | 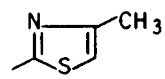 | 0,33a) | |
| 11 | $C_2H_5-O-C_2H_4-O-\overset{O}{\overset{\|}{C}}-C_2H_4$ | $C_6H_5CH_2$ | 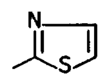 | 0,25a) | 669g) |
| 12 | $C_2H_5-OC_2H_4-O-\overset{O}{\overset{\|}{C}}-C_2H_4$ | $C_6H_5CH_2$ | 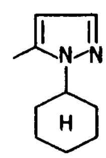 | 0,15a) | 661g) |

Tabelle 1 (Fortsetzung)

| Beispiel Nr. | Q1 | Q2 | Q3 | $R_f$-Wert | $\lambda_{max}$ [nm] |
|---|---|---|---|---|---|
| 13 | $NC-C_2H_4$ | $C_2H_5$ | 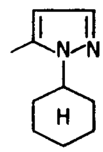 | 0,12[a)] | 654[f)] |
| 14 | $CH_3O-\overset{O}{\overset{\|}{C}}-O-C_2H_4$ | $NC-C_2H_4$ | 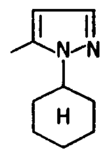 | 0,82[b)] | 640[g)] |
| 15 | $NC-C_2H_4$ | $NC-C_2H_4$ | 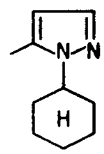 | 0,26[c)] | 614[f)] |
| 16 | $NC-C_2H_4$ | $CH_3O-\overset{O}{\overset{\|}{C}}-O-C_2H_4$ | 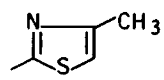 | 0,27[b)] | 673[g)] |
| 17 | $NC-C_2H_4$ | $NC-C_2H_4$ | 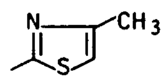 | 0,61[b)] | 637[g)] |
| 18 | $C_6H_5C_2H_4-O-\overset{O}{\overset{\|}{C}}-OC_2H_4$ | $CH_3$ | 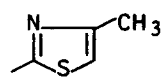 | 0,36[a)] | 672[f)] |
| 19 | $NC-C_2H_4$ | $C_2H_5$ | 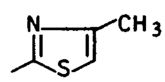 | 0,31[a)] | 660[f)] |
| 20 | $CH_3-\overset{O}{\overset{\|}{C}}-O-C_2H_4$ | $C_2H_5$ | 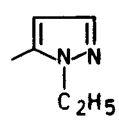 | 0,60[b)] | 675[f)] |
| 21 | $CH_3O-\overset{O}{\overset{\|}{C}}-O-C_2H_4$ | $C_2H_5$ | 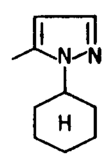 | 0,51[d)] | 675[f)] |

Tabelle 1 (Fortsetzung)

| Beispiel Nr. | $Q^1$ | $Q^2$ | $Q^3$ | $R_f$-Wert | $\lambda_{max}$ [nm] |
|---|---|---|---|---|---|
| 22 | $NC-C_2H_4$ | $C_4H_9$ | 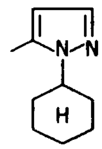 | 0,67[d)] | 652[f)] |
| 23 | $C_6H_5C_2H_4O-\overset{O}{\overset{\|}{C}}-O-C_2H_4$ | $CH_3$ | 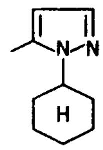 | 0,19[a)] | 666[f)] |
| 24 | $CH_3-\overset{O}{\overset{\|}{C}}-O-C_2H_4$ | $C_2H_5$ | 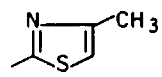 | 0,37[a)] | 683[f)] |
| 25 | $CH_3-\overset{O}{\overset{\|}{C}}-O-C_2H_4$ | $C_2H_5$ | 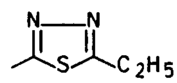 | 0,70[b)] | 689[f)] |
| 26 | $C_4H_9OC_2H_4$ | $C_4H_9$ | 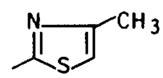 | 0,84[b)] | 699[f)] |
| 27 | $CH_3-\overset{O}{\overset{\|}{C}}-O-C_2H_4$ | $C_2H_5$ | 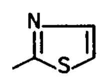 | 0,30[a)] | 684[f)] |
| 28 | $NC-C_2H_4$ | $NC-C_2H_4$ | 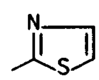 | 0,76[b)] | 621[f)] |
| 29 | $NC-C_2H_4$ | $C_4H_9$ | 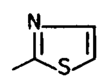 | 0,36[a)] | 663[f)] |
| 30 | $NC-C_2H_4$ | $C_2H_5$ | 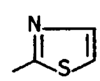 | 0,26[e)] | 660[f)] |
| 31 | $CH_3-O-\overset{O}{\overset{\|}{C}}-O-C_2H_4$ | $NC-C_2H_4$ | 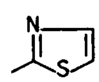 | 0,83[b)] | 638[f)] |
| 32 | $NC-C_2H_4$ | $NC-C_2H_4$ | 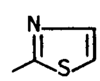 | 0,77[b)] | |

Tabelle 1 (Fortsetzung)

| Beispiel Nr. | $Q^1$ | $Q^2$ | $Q^3$ | $R_f$-Wert | $\lambda_{max}$ [nm] |
|---|---|---|---|---|---|
| 33 | $NC-C_2H_4$ | $NC-C_2H_4$ | 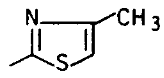 | 0,39[c)] | 640[f)] |
| 34 | $NC-C_2H_4$ | $NC-C_2H_4$ | 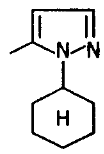 | 0,61[b)] | 652[g)] |

Transfer der Farbstoffe

Um das Transferverhalten der Farbstoffe quantitativ und in einfacher Weise prüfen zu können, wurde der Thermotransfer mit großflächigen Heizbacken statt eines Thermokopfes durchgeführt, wobei die Transfertemperatur im Bereich 70 °C < T < 120 °C variiert und die Transferzeit auf 2 Minuten festgelegt wurde.

α) Allgemeines Rezept für die Beschichtung der Träger mit Farbstoff: Es wurde eine Lösung aus 0,25 g Farbstoff in 5 ml Tetrahydrofuran hergestellt. Zu dieser Lösung wurde gegebenenfalls 1 g Bindemittel, das in 8 ml Toluol/Ethanol (8:2 v/v) bei 40 bis 50 °C gelöst worden war, eingerührt und gegebenenfalls von unlöslichem Rückstand abfiltriert. Die so erhaltene Druckpaste wurde mit einer 80 µm Rakel auf eine Polyesterfolie (Dicke: 6 bis 10 µm) abgezogen und mit einem Fön getrocknet.

β) Prüfung auf thermische Transferierbarkeit

Die verwendeten Farbstoffe wurden in der folgenden Weise geprüft:

Die den zu prüfenden Farbstoff in der Beschichtungsmasse (Vorderseite) enthaltende Polyesterfolie (Geber) wurde mit der Vorderseite auf kommerziell erhältliches (unten näher bezeichnetes) Papier (Nehmer) gelegt und aufgedrückt. Geber/Nehmer wurden dann mit Aluminiumfolie umwickelt und zwischen zwei beheizten Platten bei verschiedener Temperatur T (im Temperaturintervall 70 °C < T < 120 °C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 80 und 110 °C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta \left[\frac{1}{T}\right]}$$

Zur vollständigen Charakterisierung wurde aus den Auftragungen zusätzlich die Temperatur T* [°C] entnommen, bei der die Extinktion A der angefärbten Nehmerpapiere den Wert 1 erreicht.

Die in der folgenden Tabelle 2 aufgeführten Farbstoffe wurden nach α) verarbeitet und die erhaltenen, mit Farbstoff beschichteten Träger nach β) auf das Transferverhalten geprüft. In der Tabelle sind jeweils die Thermotransferparameter T* und $\Delta E_T$ sowie das Gewichtsverhältnis Farbstoff:Bindemittel aufgeführt.

Dabei gelten folgende Abkürzungen:

F = Farbstoff
B = Bindemittel (EC = Ethylcellulose)
VYC = Hitachi VY-C Paper (Nehmer)

| | | |
|---|---|---|
| VYSX | = | Hitachi VY-SX Paper (Nehmer) |
| HCVPP | = | Hitachi HCVPP Paper (Nehmer) |
| PC | = | Kodak Color Video Print Paper (Nehmer) |

Tabelle 2

| Bsp. Nr. | Farbstoff Nr. | B | F:B | $\Delta E_T$ [kJ/mol] | T* | Nehmer [°C] |
|---|---|---|---|---|---|---|
| 35 | 1 | EC | 1:2 | 90 | 99 | VYC |
| 36 | 2 | EC | 1:2 | 97 | 112 | VYC |
| 37 | 3 | EC | 1:2 | 40 | 106 | VYSX |
| 38 | 4 | EC | 1:2 | 77 | 124 | VYC |
| 39 | 7 | EC | 1:2 | 69 | 99 | VYC |
| 40 | 20 | EC | 1:2 | 77 | 124 | VYC |
| 41 | 21 | EC | 1:2 | 81 | 119 | VYC |
| 42 | 22 | EC | 1:2 | 90 | 123 | VYC |
| 43 | 23 | EC | 1:2 | 96 | 103 | HCVPP |
| 44 | 23 | EC | 1:2 | 88 | 105 | VYC |
| 45 | 24 | EC | 1:2 | 90 | 99 | VYC |
| 46 | 24 | EC | 1:2 | 108 | 97 | PC |
| 47 | 25 | EC | 1:2 | 40 | 106 | VYSX |
| 48 | 26 | EC | 1:2 | 69 | 99 | VYC |
| 49 | 27 | EC | 1:2 | 97 | 112 | VYC |
| 50 | 28 | EC | 1:2 | 75 | 136 | PC |
| 51 | 29 | EC | 1:2 | 86 | 121 | VYC |
| 52 | 30 | EC | 1:2 | 77 | 126 | VYC |
| 53 | 31 | EC | 1:2 | 87 | 132 | VYC |

## Patentansprüche

**1.** Indonaphtholfarbstoffe der Formel I

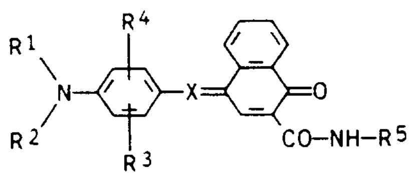

(I),

in der

| | |
|---|---|
| X | Stickstoff, |
| $R^1$ und $R^2$ | unabhängig voneinander jeweils $C_1$-$C_6$-Alkyl, das gegebenenfalls substituiert und/oder durch 1 oder 2 Sauerstoffatome in Etherfunktion unterbrochen ist, oder Allyl, |
| $R^3$ und $R^4$ | unabhängig voneinander jeweils Wasserstoff, $C_1$-$C_4$-Alkyl, $C_1$-$C_4$-Alkoxy oder $C_1$-$C_4$-Alkanoylamino und |
| $R^5$ | einen fünfgliedrigen aromatischen heterocyclischen Rest, der nicht benzoanelliert ist und zwei oder mehrere Heteroatome, ausgewählt aus der Gruppe, bestehend aus Stickstoff, Sauerstoff und Schwefel, aufweist, bedeuten, |

mit der Maßgabe, daß $R^1$ und $R^2$ nicht gleichzeitig für unsubstituiertes $C_1$-$C_6$-Alkyl stehen.

**2.** Indonaphtholfarbstoffe nach Anspruch 1, dadurch gekennzeichnet, daß $R^5$ sich von einem Heterocyclus aus der Pyrazol-, Imidazol-, Oxazol-, Isoxazol-, Thiazol-, Isothiazol-, 1,2,4-Triazol-, 1,2,4-Oxdazol-, 1,3,4-Oxdiazol-, 1,2,4-Thiadiazol- oder 1,3,4-Thiadiazolreihe ableitet.

**3.** Verfahren zur Übertragung von Indonaphtholfarbstoffen von einem Träger auf ein mit Kunststoff beschichtetes Papier mit Hilfe einer Energiequelle, dadurch gekennzeichnet, daß man einen Träger

verwendet, auf dem sich ein oder mehrere Indonaphtholfarbstoffe der Formel I gemäß Anspruch 1 befinden.

## Claims

**1.** An indonaphthol dye of the formula I

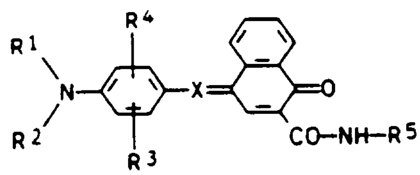

(I)

where

X is nitrogen,

$R^1$ and $R^2$ are each independently of the other $C_1$-$C_6$-alkyl, which may be substituted, $C_1$-$C_6$-mono-oxaalkyl or -dioxaalkyl or allyl,

$R^3$ and $R^4$ are each independently of the other hydrogen, $C_1$-$C_4$-alkyl, $C_1$-$C_4$-alkoxy or $C_1$-$C_4$-alkanoyl-amino, and

$R^5$ is five-membered hetaryl which is not benzo-fused and has two or more hetero atoms selected from the group consisting of nitrogen, oxygen and sulfur,

with the proviso that $R^1$ and $R^2$ are not both unsubstituted $C_1$-$C_6$-alkyl at one and the same time.

**2.** An indonaphthol dye as claimed in claim 1, wherein $R^5$ is derived from a heterocycle from the pyrazole, imidazole, oxazole, isoxazole, thiazole, isothiazole, 1,2,4-triazole, 1,2,4-oxadiazole, 1,3,4-oxadiazole, 1,2,4-thiadiazole and 1,3,4-thiadiazole series.

**3.** A process for transferring an indonaphthol dye from a transfer to a sheet of plastic-coated paper with the aid of an energy source, which comprises using a transfer on which there is or are one or more indonaphthol dyes of the formula I as claimed in claim 1.

## Revendications

**1.** Colorants de la famille de l'indonaphtalène de formule I

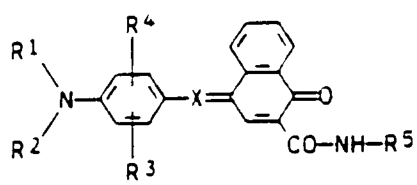

(I),

dans laquelle

X représente un atome d'azote,

$R^1$ et $R^2$ représentent chacun, indépendamment l'un de l'autre un reste alkyle en $C_1$-$C_6$ qui est éventuellement substitué et/ou interrompu par 1 ou 2 atomes d'oxygène en fonction éther, ou un reste allyle,

$R^3$ et $R^4$ représentent chacun, indépendamment l'un de l'autre, un atome d'hydrogène ou un reste alkyle en $C_1$-$C_4$, alcoxy en $C_1$-$C_4$ ou (alcanoyl en $C_1$-$C_4$)amino et

$R^5$ représente un reste hétérocyclique aromatique pentagonal qui n'est pas benzocondensé et comporte deux ou plusieurs hétéroatomes, choisis dans le groupe constitue par l'azote, l'oxygène et le soufre,

étant spécifie que $R^1$ et $R^2$ ne sont pas mis en même temps pour des restes alkyle en $C_1$-$C_6$ non substitués.

**2.** Colorants de la famille de l'indonaphtalène selon la revendication 1, caractérisés en ce que $R^5$ dérive d'un hétérocycle de la série du pyrazole, de l'imidazole, de l'oxazole, de l'isoxazole, du thiazole, de l'isothiazole, du 1,2,4-triazole, du 1,2,4-oxadiazole, du 1,3,4-oxadiazole, du 1,2,4-thiadiazole ou du 1,3,4-thiadiazole.

**3.** Procédé de transfert de colorants de la famille de l'indonaphtalène entre un support et un papier enduit de matière plastique, à l'aide d'une source d'énergie, caractérisé en ce qu'on utilise un support sur lequel se trouvent un ou plusieurs colorants de la famille de l'indonaphtalène de formule I selon la revendication 1.